# EUROPÄISCHE PATENTSCHRIFT

(11) **EP 0 858 379 B1**
(45) Veröffentlichungstag und Bekanntmachung des Hinweises auf die Patenterteilung: **12.06.2002**
(21) Anmeldenummer: 96937306.7
(22) Anmeldetag: 31.10.1996
(51) Int. Cl.: B23K 11/31

(54) **VORRICHTUNG ZUM WIDERSTANDSSCHWEISSEN**
RESISTANCE WELDING DEVICE
DISPOSITIF POUR SOUDURE PAR RESISTANCE

(30) Priorität: 03.11.1995 DE 19541090
(43) Veröffentlichungstag der Anmeldung: 19.08.1998
(73) Patentinhaber: DALEX-WERKE NIEPENBERG GMBH & CO. KG, 57537 Wissen/Sieg (DE)
(72) Erfinder: VOLLMERS, Gerhard, D-51597 Morsbach (DE)
(74) Vertreter: Finsterwald, Manfred, Dipl.-Ing., Dipl.-Wirtsch.-Ing.
(86) Internationale Anmeldenummer: EP9604731
(87) Internationale Veröffentlichungsnummer: WO9717162

(56) Entgegenhaltungen:
- EP-A- 0 508 874
- WO-A-92/17311
- DE-A- 2 915 442
- DE-A- 4 108 220
- DE-A- 4 201 925
- FR-A- 2 529 624

## Beschreibung

Diese Erfindung betrifft eine Widerstandsschweißanlage mit einer Arbeitskolben-Zylindereinheit zur Ausführung einer Elektrodenbewegung während des Schweißvorgangs gemäß dem Oberbegriff des Anspruchs 1.

Eine derartige Anlage ist aus Dokument DE-A1-2 915 442 bekannt.

Das Widerstandsschweißen ist ein allgemein bekanntes Verfahren, bei dem beispielsweise zwei Bleche miteinander verbunden werden, indem sie von zwei Elektroden, von denen zumindest eine bewegbar ist, zusammengepreßt werden und mittels ausreichender elektrischer Widerstandserwärmung durch den Schweißstrom ein Schmelzen und anschließendes Erstarren des Werkstoffes an der Fügestelle erfolgt.

Die Qualität der Schweißverbindung wird dabei entscheidend davon beeinflußt, wie gut der Kontakt zwischen Elektrode und Werkstück ist, da die Übergangswiderstände und somit die Verteilung der erzeugten Wärme durch diesen_Kontakt beeinflußt sind.

Es ist daher zunächst von Bedeutung, wie die Elektrode auf das Werkstück aufgesetzt wird, da bei zu schneller Aufsetzbewegung die Elektrode prellt, so daß die Andrückkraft zunächst oszilliert und vor dem Einschalten des Schweißstromes das Abklingen dieser Oszillation abgewartet werden muß, was aber die Arbeitsgeschwindigkeit auf nachteilige Weise herabsetzt. Beim Punktschweißen kommt es beim schnellen Aufsetzen zu einer unkontrollierten hohen Schlagenergie, welche zur Kaltverformung und zum schnellen Verschleiß der Elektroden führt.

Beim Buckelschweißen bewirkt das zu schnelle Aufsetzen eine unkontrollierte Kaltverformung der Buckel vor dem Einschalten des Schweißstromes und somit ein unsicheres Schweißergebnis.

Man versucht bisher, durch Zuordnen von Dämpfungs- und Drosselventilen die Aufsetzgeschwindigkeit der Elektrode zu regulieren. Eine gewisse Besserung des Aufsetzverhaltens hat man durch den Einsatz von Doppelhub- und Zustellhubeinheiten erreicht.

Die für den Anpreßdruck zwischen Elektrode und Werkstück verantwortliche Kraft muß jedoch nicht nur zu Beginn der Schweißung bereitgestellt werden, sondern auch während der Schweißung.

Von Bedeutung ist hierbei, daß das zu schweißende Material während des Schweißens weich, d.h. teigig wird und an der Fügestelle schmilzt. Wenn die Elektrode hierbei nicht ausreichend schnell nachgesetzt wird, kann die Kraft zwischen Werkstück und Elektroden in ungünstigen Fällen soweit abnehmen, daß kein ausreichender elektrischer Kontakt mehr zwischen Elektroden und Werkstück vorhanden ist. Dies führt angesichts der extrem hohen Stromdichte zu nachteiliger Spritzerbildung und vorzeitigem Elektrodenverschleiß. Wird beim Buckelschweißen die Elektrode nicht ausreichend schnell nachgesetzt, vermindert sich insbesondere der Kontaktdruck zwischen dem angeprägten Buckel des einen Bleches und dem Gegenblech, wodurch es zu einem Wegspritzen des erweichten Buckels oder einer Porenbildung in der Schweißlinse kommen kann.

Bei den bisher bekannten Verfahren wird die Elektrodenkraft während der Schweißung vorrangig von Einfachhubzylindern oder dem Arbeitshub von Doppel- oder Zustellhubzylindern bereitgestellt, die in der Regel pneumatisch betätigt werden.

Das Ziel der vorliegenden Erfindung besteht darin, die Schweißung von Werkstücken zu verbessern, wobei insbesondere die Qualität der Schweißung und/oder die Schweißgeschwindigkeit erhöht werden soll. Dabei soll eine schnelle, präzise Nachsetzbewegung der Schweißelektrode während des Schweißvorgangs gewährleistet werden.

Dieses Ziel wird bei einer Vorrichtung der eingangs genannten Art durch die Merkmale des Anspruchs 1 erreicht.

Bei der erfindungsgemäßen Anlage ist es von Vorteil,
- wenn der aus der Bereitschaftsposition heraus maximal mögliche Hub der Arbeitskolben-Zylindereinheit dem 1- bis 20-fachen, insbesondere dem 1- bis 10-fachen, und vorzugsweise dem 1- bis 5-fachen Nachsetzweg zusammenbrechendender Buckel beim Buckelschweißen entspricht, bzw.
- wenn der aus der Bereitschaftsposition heraus maximal mögliche Hub der Arbeitskolben-Zylindereinheit dem 1- bis 60-fachen, insbesondere dem 1- bis 30-fachen, und vorzugsweise dem 1- bis 20-fachen Eindringweg der Schweißelektrode in einen ursprünglich harten und während des Schweißvorgangs teigig werdenden Werkstoff beim Punktschweißen entspricht, bzw.
- wenn der aus der Bereitschaftsposition heraus maximal mögliche Hub der Arbeitskolben-Zylindereinheit dem 1- bis 30-fachen, insbesondere dem 1- bis 15-fachen, und vorzugsweise dem 1- bis 10-fachen Eindringweg der Schweißelektrode in einen ursprünglich weichen und während des Schweißvorgangs teigig werdenden Werkstoff beim Punktschweißen entspricht.

Im Rahmen der Erfindung wurde erkannt, daß bei bisher bekannten Anordnungen die maximal moglichen Hublängen der Einfach-, Doppel- oder Zustellhubzylinder groß dimensioniert sind, so daß während des Schweißvorganges ein relativ großes Luftvolumen oberhalb des Arbeitskolbens in den Zylinderraum einströmt und komprimiert wird und meist noch ein größeres komprimiertes Luftvolumen aus dem Zylinderraum unterhalb des Arbeitskolbens entweichen muß. Die hierdurch entstehenden langen Luftströmungszeiten beeinflussen das Nachsetzverhalten der Elektrode während der Schweißung sehr ungünstig.

Da erfindungsgemäß der maximal mögliche Hub der pneumatisch beaufschlagten Arbeitskolben-Zylindereinheit aus der Bereitschaftsposition heraus im wesentlichen nur dem benötigten Arbeitshub der Schweißelektrode für den Eindringweg der Punktschweißelektroden in den teigigen Werkstoff beim Punktschweißen und/oder für den Nachsetzweg der zusammenbrechenden Buckel beim Buckelschweißen entspricht, muß lediglich ein sehr kleines Arbeitszylindervolumen mit Druckluft beaufschlagt werden, um den Arbeitskolben und somit die Schweißelektrode in Richtung des Werkstückes zu verfahren. Zugleich muß auch nur ein sehr geringes Volumen unterhalb des Arbeitskolbens aus dem Arbeitszylinder verdrängt werden.

Dies erfordert weniger Zeit als bei bisher bekannten Verfahren, so daß sich die für eine erforderliche Schweißelektroden-Anpreßkraft benötigten Druckverhältnisse in der Arbeitskolben-Zylindereinheit sehr schnell einstellen. Zudem muß durch die geringe Ausdehnung des druckbeaufschlagten Volumens auch nur- ein geringerer Komprimierungseffekt bewirkt werden als bei größeren Volumina, was zu einer verbesserten Kraftwirkung der Elektrode führt.

Ausgehend davon, daß die Schweißelektrode in der Bereitschaftsposition das Werkteil sanft berührt oder einen Abstand zum Werkteil im Zehntel- bzw. Hundertstelmillimeterbereich aufweist, ist nach pneumatischer Beaufschlagung der Arbeitskolben-Zylindereinheit kaum eine Elektrodenbewegung wahrnehmbar. Werden nun z.B. zwei Bleche mit einer Blechdicke von je 2 mm buckelgeschweißt, so muß hierzu das Volumen oberhalb des Kolbens mit komprimierter Druckluft gefüllt werden, wodurch zu Beginn des Schweißvorganges die Werkteile von der Elektrode zusammengepreßt werden. Aufgrund entsprechender Dimensionierung für die genannte und ähnliche Schweißaufgaben (auch Vielbuckelschweißen), beträgt der Abstand zwischen Arbeitskolben und dem ihm zugeordneten Zylinderdeckel nur ca. 1 mm.

Da das durch diesen geringen Absrand bedingte relativ kleine Volumen innerhalb sehr kurzer Zeit mit komprimierter Druckluft auffüllbar ist, kann bereits nach Ablauf nur von Millisekunden ab Betätigung der Arbeitskolben-Zylindereinheit der Schweißstrom eingeschaltet werden. Dies wird zusätzlich durch relativ große Lufteintrittsquerschnitte und dadurch bedingte gute Strömungsgeschwindigkeiten für die Druckluft unterstützt.

Anschließend an das Einschalten des Schweißstroms erfolgt das Schmelzen des Buckels, welcher bei der genannten Blechdicke eine Höhe von ca. 1 mm aufweist, und ab jetzt beginnt erst eine sichtbare Elektrodenbewegung, die nach der Rückverformung des Buckels (ca. 1 mm) beendet ist.

Zum Erstarren der Schweißlinse bleibt der Elektrodendruck für eine kurze Zeit aufrechterhalten. Für den gesamten Schweißvorgang muß somit bei einem Kolbenweg von ca. 1 mm ein Volumen oberhalb des Kolbens mit einer Höhe von insgesamt ca. 2 mm gefüllt werden, was innerhalb einer sehr kurzen Zeit erfolgt und somit ein schnelles Nachsetzen der Elektrode ermöglicht.

Um den schnellen Druckaufbau oberhalb des Kolbens mit der sich hieraus ergebenden theoretischen Elektrodenkraft voll nutzen zu können, muß auch das bei der Beaufschlagung der Arbeitskolben-Zylindereinheit sich unterhalb des Kolbens befindliche komprimierte Luftvolumen schnell entweichen können.

Dies wird erfindungsgemäß dadurch erreicht, daß der maximal mögliche Hub möglichst klein, insbesondere sehr klein ist. Unter Berücksichtigung einer möglichen Maschinenaufbiegung beträgt der Hub bei dem beschriebenen Beispiel ca. 2 mm. Durch die auch hier groß ausgelegten Luftaustrittsquerschnitte entweicht die Druckluft aus dem relativ kleinen Volumen sehr schnell, und die Elektrodenkraft wird schnell voll wirksam.

Durch die Tatsache, daß innerhalb von. Millisekunden nach Beaufschlagung der Arbeitskolben-Zylindereinheit der Schweißstrom eingeschaltet wird, ist ein unkontrolliertes Kaltverformen des Buckels vor dem Schweißen ausgeschlossen. Dieser Vorteil wirkt sich in Verbindung mit dem nachfolgenden schnellen Nachsetzen der Elektrode besonders günstig beim Buckelschweißen vom Aluminium und ähnlich formweichen Werkstoffen aus.

Vorzugsweise ist vorgesehen, daß die Schweißelektrode nach Beendigung der Widerstandsschweißung durch pneumatische Beaufschlagung der Arbeitskolben-Zylindereinheit in die Bereitschaftsposition zurückgefahren wird.

In alternativer Weise kann die Rückhubbewegung der Schweißelektrode jedoch auch durch Federkraft erfolgen.

Die Steuerung der Druckluft für die wechselseitige Bewegung der Arbeitskolben-Zylindereinheit wird für beide Rückstellarten vorzugsweise mit entsprechenden Umschaltventilen durchgeführt.

Die Vorhubanordnung kann wahlweise pneumatisch, hydraulisch, elektromotorisch, durch Muskelkraft von Hand, oder durch eine sonstige Art der Kinematik betätigt werden.

Bezogen zur Lage und Bewegungsrichtung der Schweißelektrode kann die Aneinanderkopplung von Vorhubanordnung und Arbeitskolben-Zylindereinheit in unterschiedlicher Zuordnung erfolgen.

Es besteht weiterhin die Möglichkeit die Vorhubanordnung von der Arbeitskolben-Zylindereinheit zu trennen und, bezogen zum Werkteil, auf der gegenüberliegenden Seite der Arbeitskolben-Zylindereinheit anzuordnen. Hierbei wird dann die Vorhubbewegung aus der Ausgangsposition in die Bereitschaftsposition durch die Gegenelektrode ausgeführt. Anschließend erfolgt die Widerstandsschweißung durch die Beaufschlagung der erfindungsgemäßen Arbeitskolben-Zylindereinheit.

Das Zusammenspiel zwischen Vorhubanordnung und Arbeitskolben-Zylindereinheit ist durch entsprechende Programmvorwahl der Maschinenablaufsteuerung variabel ausgelegt. Bei den vorrangig durchzuführenden Schweißaufgaben wird nach Beendigung der Schweißung das Werkteil aus der Maschine entnommen. Bedingt hierdurch wird dann mit dem Zurückfahren der Arbeitskolben-Zylindereinheit bei jedem Arbeitstakt auch die Vorhubanordnung in die Ausgangsposition zuruckbewegt.

Bei Verwendung einer Vorhubanordnung kann die Arbeitskolben-Zylindereinheit zwischen der Vorhubanordnung und der Schweißelektrode angeordnet werden. Ebenso ist es möglich, die Vorhubanordnung zwischen der Arbeitskolben-Zylindereinheit und der Schweißelektrode anzuordnen.

Weiterhin kann es in bestimmten Anwendungsfällen, beispielsweise bei einer handgeführten Schweißzange von Vorteil sein, wenn die Elektrode von der Arbeitskolben-Zylindereinheit und die Gegenelektrode von der Vorhubanordnung beaufschlagt wird.

Ein weiterer Vorteil gegenüber dem bisher angewendeten Verfahren besteht bei der Betriebsart "Serienpunktschweißen". Bei dieser allgemein bekannten Widerstandsschweißart werden z.B. zwei Bleche durch dicht hintereinander anzuordnende Schweißpunkte miteinander verbunden. Nach jeder durchgeführten Schweißung wird die Elektrode vom Werkteil im Zehntelmillimeterbereich abgehoben, das Werkteil um den gewünschten Punktabstand weiterbewegt und die nächste Schweißung durchgeführt. Diese Vorgänge laufen kontinuierlich durch bis zur Durchführung des letzten Schweißpunktes.

Durch Verwendung der erfindungsgemäßen Anlage wird bei dem Serienpunktschweißen nach dem Einlegen des Werkteils mittels der Vorhubanordnung die Schweißelektrode aus der Ausgangsposition in die Bereitschaftsposition verfahren. Bei den jetzt folgenden Schwsißvorgängen wird bis zum letzten Schweißpunkt nur die Arbeitskolben-Zylindereinheit getaktet, und erst nach Beendigung des Schweißvorganges führt die Vorhubanordnung die Schweißelektrode in die Ausgangsposition zurück. Durch die klein ausgelegten Volumina der Arbeitskolben-Zylindereinheit erfolgt das stetige Be- und Entlüften jeweils in sehr kurzer Zeit, wodurch eine hohe Schweißgeschwindigkeit bzw. schnell aufeinanderfolgende Punktschweißungen erzielt wird.

Gemäß der Erfindung ist der Abstand der Schweißelektrode zum Werkteil in der Bereitschaftsposition variierbar und vor Schweißbeginn entsprechend einzustellen. Bevorzugt ist hierbei eine sanfte Berührung des Werkteiles durch die Elektrode, bzw. ein Abstand zwischen Elektrode und Werkteil im Zehntel- oder Hundertstelmillimeterbereich, wie es zum Beispiel beim Serienpunktschweißen erforderlich ist. Bei dieser Einstellung wird die Elektrode beim Heranführen aus der Ausgangsposition in die Bereitschaftsposition im wesentlichen schlag- und stoßfrei auf das Werkstück aufgesetzt.

Als Vorteil ergibt sich bei der Vielbuckelschweißung, daß mit der Elektrodenbewegung aus der Ausgangsposition in die Bereitschaftsposition durch das Aufsetzen der großflächigen Elektrode auf das Werkstück die Buckel um ein gezieltes Maß im Zehntelmillimeterbereich angedrückt werden. Hierdurch werden Höhentoleranzen, die bei dem Prägen der Buckel nicht vermeidbar sind, ausgeglichen und für den nachfolgenden Schweißvorgang die elektrischen Widerstände zwischen den einzelnen Buckeln und dem Gegenblech egalisiert. Das Schweißergebnis wird hierdurch verbessert.

Durch das schnelle Nachsetzen der Elektrode beim Schweißvorgang ist das erfindungsgemäße Verfahren vorteilhaft für fast alle vorkommenden Widerstandsschweißarbeiten.

Die erfindungsgemäß verbesserten Nachsetzeigenschaften sind auch beim Punkt- und Buckelschweißen von Stahlblechen mit metallischen Überzügen und Nichteisenmetallen vorteilhaft, da eine mangelnde Kraftschlüssigkeit hierbei zu einer Überhitzung der Werkstückoberfläche führen würde.

Besonders hervorzuheben ist, daß erfindungsgemäß sogar Aluminium, Aluminiumlegierungen und ähnlich formweiche Werkstoffe buckelgeschweißt werden können, obwohl es sich hierbei um Werkstoffe handelt, bei denen der Übergang vom festen in den teigigen bzw. flüssigen Zustand binnen einer sehr kurzen Zeitspanne erfolgt. Diese physikalische Eigenschaft setzt ein besonders schnelles Nachsetzen der Schweißelektrode während der Schweißung voraus. Hierbei ist es nicht mehr erforderlich, wie bisher Buckel mit erhöhter Festigkeit und speziellen Formen in das Aluminiumblech einzuprägen, sondern es genügen die bei der Stahlschweißung üblichen Rundbuckel.

Durch die kleinen Luftvolumina der Arbeitskolben-Zylindereinheit beidseitig des Kolbens ergibt sich weiterhin der Vorteil, daß sich bei Druckänderung die gewünschte Elektrodenkraftänderung sehr schnell, d.h. im Millisekundenbereich einstellt.

Die Druckänderung kann mit den allgemein üblichen Techniken des Druckprogramm-Widerstandsschweißens durchgeführt werden. Vorteile bringt dieses Verfahren zusätzlich bei vielen Widerstandsschweißaufgaben, speziell beim Buckel- und Punktschweißen von Aluminium. Durch ein Druckprogramm oder auch Stromdruckprogramm, bei dem vorzugsweise zum Ende des Schweißvorganges die Elektrodenkraft erhöht wird, vermindert sich die Porenbildung innerhalb der Schweißlinse.

Bei der Widerstandsschweißanlage gemäß der Erfindung kann es sich beispielsweise um eine C-förmige Ständermaschine, eine Portalmaschine, eine Mehrzylinder-Schweißanlage, eine handgeführte Schweißzange in Scheren- oder C-Form, eine robotergeführte Schweißzange in Scheren- oder C-Form aber auch um jede andere Widerstandsschweißanlage handeln. Die Widerstandsschweißanlage kann mit einer der unterschiedlichen Stromarten gemäß dem Stand der Technik ausgerüstet sein.

In einer bevorzugten Ausführungsform ist dabei die Arbeitskolben-Zylindereinheit als ein für sich geschlossener klassischer Zylinder ausgebildet, mit zugehörigem Zylinderdeckel und Zylinderboden. Damit steht insbesondere in jeder durch die Position der Vorhubanordnung bestimmten Bereitschaftsposition derselbe Arbeitshub zur Verfügung.

Die Abdichtung des Kolbens der Arbeitskolben-Zylindereinheit zu den beidseitig anliegenden Luftvolumina (Zylinderdeckelseite und Zylinderbodenseite) sowie auch die Abdichtung der Kolbenstange innerhalb des Zylinderbodens kann wahlweise durch Gleitdichtungen oder durch Membranen aus Gummi oder ähnlichen Werkstoffen erfolgen.

Durch den erfindungsgemäß sehr kleinen maximal möglichen Hub der Arbeitskolben-Zylindereinheit ist bei Abdichtung von Kolben und Kolbenstangen durch Membranen die Zylinderfunktion bedeutend sicherer und der Verschleiß der Membranen geringer als bei den bisher teilweise verwendeten Rollmembranzylindern.

Die Vorhubanordnung umfaßt in einer bevorzugten Ausbildung der Erfindung eine von einem Elektromotor beaufschlagbare, in Vorhubrichtung verlaufende Spindel und ein durch diese bewegtes, mit der Arbeitskolben-Zylindereinheit verbundenes Gewindeelement. Mit dieser Vorhubanordnung kann die Bereitschaftsposition der Schweißelektrode auf einfache Weise dadurch eingestellt werden, daß der Elektromotor solange betätigt wird, bis die Schweißelektrode die gewünschte Bereitschaftsposition erreicht hat.

Dies gestattet eine besonders komfortable Einstellung des Elektrodenabstandes zum Werkstück in der Bereitschaftsposition, z.B. durch eine numerische Steuerung.

Eine erfindungsgemäße Anlage kann weiter wenigstens eine als Doppel- oder Mehrfachkolben-Anordnung gebildete Kolben-Zylindereinheit umfassen. Auf diese weise wird die Elektrodenkraft erhöht. Wenn dabei die Arbeitskolben-Zylindereinheit als Doppel- oder Mehrfachkolben-Anordnung ausgebildet ist, ist der maximal mögliche Hub jeder Arbeitskolben-Zylindereinheit erfindungsgemäß ausgeführt.

Weitere vorteilhafte Ausführungsformen der Erfindung sind in den Unteransprüchen beschrieben.

Die Erfindung wird im folgenden nur beispielsweise anhand der Zeichnung beschrieben. In dieser zeigt

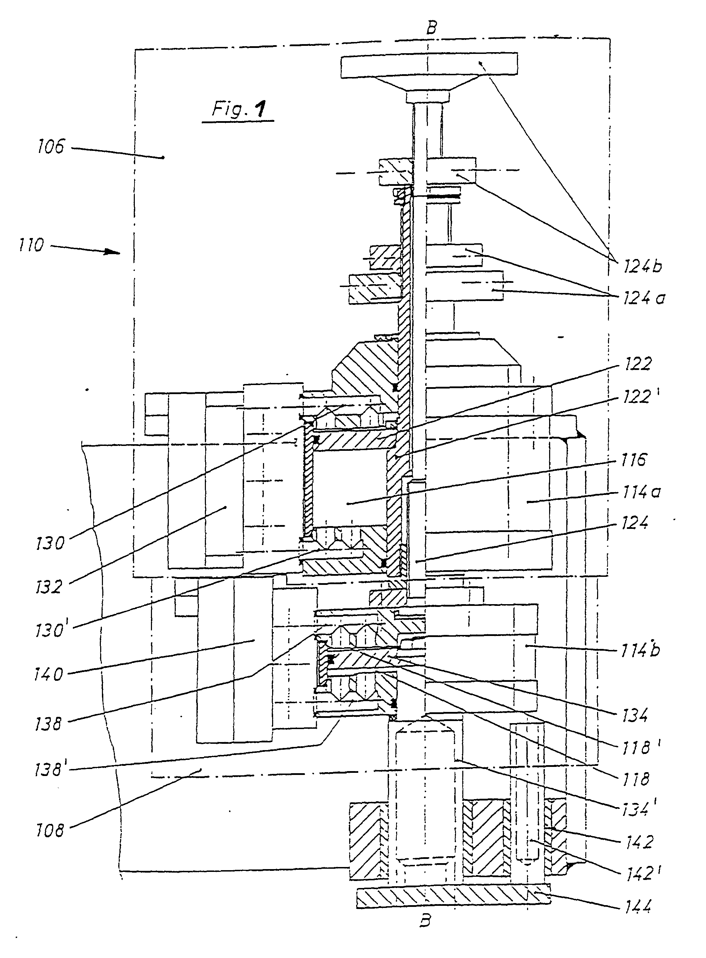

Figur 1 eine erfindungsgemäße Elektrodenkrafteinheit für eine Widerstandsschweißanlage gemäß der vorliegenden Erfindung.

Nach Figur 1 umfaßt eine erfindungsgemäße Elektroden-Krafteinheit 110 eine Vorhubanordnung 106 mit einem ersten Gehause 114a und eine nachgeschaltete Arbeitskolben-Zylindereinheit 108 mit einem zweiten, vom ersten getrennten Gehäuse 114b. Die Gehäuse 114a und 114b umfassen jeweils Zylinderdeckel, Zylindermantel und Zylinderboden.

Im Gehäuse 114a der Vorhubanordnung ist ein Vorhub-Zylinderraum 116 vorgesehen, in welchem ein Vorhubkolben 122 dichtend für die Bewegung über große Vorhubstrecken gleitfähig längs der Bewegungsachse B-B aufgenommen ist. Der Vorhubkolben 122 ist an einer beidseits in der Richtung der Bewegungsachse B-B aus dem Gehäuse 114a geführten Kolbenstange 122' befestigt.

Oberhalb und unterhalb des Kolbens 122 sind im Gehäuse 114a Druckfluiddurchführungen 130 und 130' vorgesehen, die über ein Druckfluidwechselventil 132 mit einer Druckfluidquelle wie einer Druckluftquelle wahlweise verbunden sind. Der Durchmesser der Vorhubanordnung und der Drück des Fluids sind so aufeinander abgestimmt, daß die benötigte Elektrodenkraft erzielt wird.

An der von der Schweißelektrode (nicht gezeigt) abgewandten Seite (in Fig. 1 oben) der Vorhub-Kolbenstange 122' ist eine verstellbare Konterung 124a zur Grobbegrenzung der Vorhubkolbenbewegung im Vorhubzylinder 116 vorgesehen.

Die Vorhubkolbenstange 122' ist mit einer längs der Achse B-B verlaufenden Bohrung versehen, durch welche eine mit dem Konterelement 124b konrerbare Feineinstellspindel 124 bis über das werkstückseitige Ende (in Fig. 1 unten) der Kolbenstange 122' geführt ist. An dem werkstückseitigen Ende der Feineinstellspindel 124 ist das Gehäuse 114b der Arbeits-Kolben-Zylinder-Einheit befestigt.

In dem Gehäuse 114b ist ein Zylinderraum 118 für die Aufnahme eines Arbeitskolbens 134 vorgesehen, der darin über einen kurzen Hub dichtend gleitfähig längs der Achse B-B bewegt werden kann. Der Arbeitskolben 134 ist an einer Arbeitskolbenstange 134' befestigt, welche z.B. durch ein Wälz-oder Gleitlager in Richtung des Werkstücks ausrritt. In der dem Werkstück abgewandten Endposition des Arbeitskolbens 134 bzw. in der Bereitschaftsstellung ist ein kleiner Luftverteilungsspalt 118' zwischen dem Arbeitskolben 134 und dem Arbeitszylinder 118 vorgesehen.

An der Arbeitskolbenstange 134' ist außerhalb des Gehäuses 114b vorzugsweise eine Verbindungsplatte 144 angebracht, welche den Arbeitskolben 134 mit einer in einer Führungsbohrung 142 geführten Führungsstange 142' verbindet. Die Führungsstange 142' verhindert ein Verdrehen der mit der Verbindungsplatte 144 gekoppelten (nicht dargestellten) Elektrode.

In dem Gehäuse 114b sind Druckluftzu- und -abführleitungen 138 und 138' vorgesehen, die über ein Druckluftwechselventil 140 den Arbeitskolben 134 wahlweise von beiden Richtungen mit Druckluft aus einer Pressluftquelle beaufschlagen können. Der Durchmesser des Arbeitskolbens 134 und der Pressluftdruck sind für die benötigte Elektrodenkraft aufeinander abgestimmt. Der Durchmesser des Arbeitskolbens 134 bzw. des zugehörigen Arbeitszylinderraumes 118 ist vorzugsweise kleiner als der Durchmesser der entsprechenden Elemente der Vorhubkolbenanordnung 106.

Wesentlich ist bei dieser Anordnung, daß bei gegebenem Durchmesser des Zylinderraumes 118 das Volumen über und unter dem Arbeitskolben 134 möglichst klein gehalten wird. Dies wird dadurch erreicht, daß der maximal mögliche Hub des Arbeitskolbens 134 klein gehalten wird. So kann beispielsweise vorgesehen werden, daß dem Arbeitskolben 134 im Arbeitszylinder 118 in der Bereitschaftsposition in Richtung auf das Werkstück ein Hub von lediglich ungefähr 2 mm und vom Werkstück weg ein Luftverteilungsspalt 118' von ungefähr 1 mm zur Verfügung steht, während im Vergleich hierzu der maximal mögliche Vorhub z.B. den Bereich von einigen 10 bis einigen 100 mm umfassen kann.

Die erfindunsgemäße Elektrodenkrafteinheit 110 gemäß Figur 1 wird wie folgt betrieben:

Zunächst wird der gewünschte Vorhub an der Konterung 124a grob voreingestellt.

Dann wird über das Druckwechselventil 132 Druckluft über die vom Werkstück entfernte Druckluftöffnung 130 angelegt, um die Schweißelektrode durch eine Vorhubbewegung aus ihrer Ausgangsposition in die grob eingestellte Bereitschaftsposition zu verschieben, wobei die unterhalb des Vorhubkolbens 122 im Vorhubzylinder 116 noch vorhandene Luft durch die Durchtrittsöffnungen 130' verdrangt wird.

Wenn die Schweißelektrode sich in der grob eingestellten Bereitschaftsposition befindet, kann an der Feineinstellspindel 124b die gewünschte Bereitschaftsposition genau eingestellt werden, in der sich die Schweißelektrode dicht über dem Werkstück befindet bzw. das Werkstück sanft berührt.

Die Feineinstellspindel 124b kann auch soweit nachgestellt werden, daß beim Vielbuckelschweißen, insbesondere Rundbukkelschweißen, etwa von Aluminium oder dessen Legierungen, die Buckel beim Aufsetzen der Elektrode durch die Vorhubbewegung gezielt im Submillimeterbereich kaltverformt werden.

Nachfolgend wird durch entsprechendes Ansteuern des umsteuerbaren Ventils 140 der Arbeitskolben 134 in Richtung des zu schweißenden Werkstücks beaufschlagt, bis die Schweißelektrode das Werkstück anpreßt. Das Befüllen und Entlüften des Zylindervolumens erfolgt hierbei in sehr kurzer Zeit.

Anschließend wird der vorgesehene Schweißstrom eingeschaltet. Wenn dadurch das zu schweißende Material weich wird, setzt die Elektrode zusammen mit dem Arbeitskolben 134 nach.

Die großen Querschnitte der Arbeitszylinderdruckluftzu- und abführleitungen und das geringe Arbeitszylindervolumen ermöglichen dabei ein sehr präzises Nachführen. Hierzu trägt auch die wegen des geringen Volumens nur geringe Kompressibilität der im Arbeitszylinder 118' enthaltenen Gasmenge bei.

Nachdem die Schweißung beendet und die Nachhaltezeit abgewartet wurde, wird das der Arbeitskolben-Zylindereinheit 108 zugeordnere Druckventil 140 umgesteuert und der doppelt wirkende Arbeitskolben 134 pneumatisch vom werkstück weg bewegt.

Sofern weitere Schweißungen am selben Werkstück vorgenommen werden sollen, wie z.B. bei der Betriebsart "Serienpunktschweißen", kann in der Bereitschaftsposition die nächste Schweißstelle unter die Schweißelektrode bewegt werden, und der Schweißvorgang wird wiederholt. Nach dem Abschluß der gewünschten Anzahl von Schweißungen wird die Schweißelektrode zuerst durch einen Arbeitskolben-Rücknub in die Bereitschaftsposition zurückgefahren und dann durch eine Umsteuerung des Vorhub-Ventils 132 in die Ausgangsposition zurückgezogen.

Mit der erfindungsgemäßen Vorrichtung kann ein Prellen der Schweißelektrode beim Aufsetzen weitgehend vermieden werden. Zudem ist das Nachsetzverhalten soweit verbessert, daß nunmehr auch das Rundbuckelschweißen von Aluminium und Aluminiumlegierungen möglich ist. Zudem kann bei der Betriebsart "Serienpunktschweißen" eine Hubfolge erzielt werden, die nahezu eine Größenordnung schneller als bei Anordnungen nach dem Stand der Technik ist.

Während in der dargestellten Elektrodenkrafteinheit 110 das Gehäuse 114b der Arbeitskolben-Zylindereinheit 108 über die Feineinsteil-Spindel 124 mit der Vorhubanordnung 106 verbunden ist, sind auch andere Arten der Hintereinanderschaltung möglich. So kann z.B. der Arbeitskolben 134 mit der Vorhubanordnung 106 verbunden werden, wobei die Schweißelektrode dann am nun bewegten Gehäuse 114b befestigt wird.

Weiter kann der dargestellten Arbeitskolben-Zylindereinheit 108 eine weitere oder mehrere derartige Einheiten zur Erhöhung der Elektrodenkraft nachgeschaltet sein. Von Bedeutung ist hierbei, daß der in einer Arbeitskolben-Zylindereinheit 108 mögliche Hub und damit auch das entsprechende Volumen möglichst klein gehalten wird.

Während die beispielhaft erläuterte Elektrodenkrafteinheit 110 eine pneumatisch betätigte Vorhubanordnung aufweist, ist es statt dessen beispielsweise auch möglich, die beschriebene Arbeitskolben-Zylindereinheit hydraulisch zu betätigen oder an einem Gewindeelement einer Vorhubanordnung anzubringen, das auf einer von einem Elektromotor gedrehten Spindel verschoben werden kann.

## Patentansprüche

1. Widerstandsschweißanlage mit einer Arbeitskolben-Zylindereinheit (108) zur Ausführung einer Elektrodenbewegung während des Schweißvorgangs, welche einer Vorhubanordnung (106) nachgeschaltet ist, mittels der die Schweißelektrode aus einer vom Werkstück entfernten Ausgangsposition in eine Bereitschaftsposition an das Werkstück heranführbar ist,
**dadurch gekennzeichnet,**
**daß** die Vorhubanordnung (106) in einem ersten Gehäuse (114a) und die Arbeitskolben-Zylindereinheit (108) in einem zweiten, vom ersten getrennten Gehäuse (114b) untergebracht ist,
**daß** das Verhältnis des maximal möglichen Hubs der Vorhubanordnung zum maximal möglichen Hub der Arbeitskolben-Zylindereinheit mindestens 5:1 beträgt, und
**daß** der maximal mögliche Hub der Arbeitskolben-Zylindereinheit (108)
- dem 1- bis 40-fachen Nachsetzweg zusammenbrechender Buckel beim Buckelschweißen, oder
- dem 1- bis 120-fachen Eindringweg der Schweißelektrode in einen ursprünglich harten und während des Schweißvorgangs teigig werdenden Werkstoff beim Punktschweißen, oder
- dem 1- bis 60-fachen Eindringung der Schweißelektrode in einen ursprünglich weichen und während des Schweißvorgangs teigig werdenden Werkstoff beim Punktschweißen entspricht.

2. Anlage nach Anspruch 1,
**dadurch gekannzeichnet,**
**daß** der maximal mögliche Hub der Arbeitskolben-Zylindereinheit (108) dem 1- bis 20-fachen, insbesondere dem 1-bis 10-fachen, und vorzugsweise dem 1- bis 5-fachen Nachsetzweg zusammenbrechendender Buckel beim Buckelschweißen entspricht, oder daß der maximal mögliche Hub der Arbeitskolben-Zylindereinheit (108) dem 1- bis 60-fachen, insbesondere dem 1- bis 30-fachen, und vorzugsweise dem 1- bis 20-fachen Eindringweg der Schweißelektrode in einen ursprünglich harten und während des Schweißvorgangs teigig werdenden Werkstoff beim Punktschweißen entspricht, oder daß der maximal mögliche Hub der Arbeitskolben-Zylindereinheit (108) dem 1- bis 30-fachen, insbesondere dem 1- bis 15-fachen, und vorzugsweise dem 1- bis 10-fachen Eindringweg der Schweißelektrode in einen ursprünglich weichen und während des Schweißvorgangs teigig werdenden Werkstoff beim Punktschweißen entspricht.

3. Anlage nach einem der Ansprüche 1 oder 2,
**dadurch gekennzeichnet,**
**daß** die Arbeitskolben-Zylindereinheit (108) als doppeltwirkender Zylinder ausgebildet ist, und/oder daß die Abdichtung des Kolbens der Arbeitskolben-Zylindereinheit zu den beidseitig anliegenden Luftvolumina (Zylinderdeckelseite und Zylinderbodenseite) und die Abdichtung der Kolbenstange innerhalb des Zylinderbodens wahlweise durch Gleitdichtungen oder durch Membranen aus Gummi oder ähnlichen Werkstoffen realisiert ist.

4. Anlage nach einem der Ansprüche 1 bis 3,
**dadurch gekennzeichnet,**
**daß** die Arbeitskolben-Zylindereinheit (108) pneumatisch beaufschlagt ist, und/oder daß die Schweißelektrode zumindest nach Beendigung der Widerstandsschweißung durch Federkraft beaufschlagt ist, und/oder daß die Arbeitskolben-Zylindereinheit (108) über zumindest ein Umschaltventil (140) mit Druckluft beaufschlagt ist, und/oder daß die insbesondere als Vorhubkolben-Zylindereinheit ausgebildete Vorhubanordnung (106) pneumatisch beaufschlagt ist.

5. Anlage nach einem der Ansprüche 1 bis 4,
**dadurch gekennzeichnet,**
**daß** an der Vorhubanordnung (106) ein fester oder einstellbarer Anschlag (124a, 124b) zur Begrenzung der Vorhubbewegung vorgesehen ist, und/oder daß an der Vorhubanordnung eine Feineinstellungs-Vorrichtung (124) zum insbesondere unabhängig von der Lage des Vorhubkolbens im Vorhubzylinder erfolgenden Feineinstellen des Abstandes zwischen dem Werkstück und der in die Bereitschaftsposition verschobenen Schweißelektrode vorgesehen ist, und/oder daß die Feineinstellungs-Vorrichtung (124) eine mit der Vorhubanordnung gekoppelte, konterbare Einstellspindel aufweist, welche mit der Arbeitskolben-Zylindereinheit (108) gekoppelt und gemeinsam mit dieser bewegbar ausgebildet ist.

6. Anlage nach einem der Ansprüche 1 bis 5,
**dadurch gekennzeichnet,**
**daß** wenigstens eine Kolben-Zylindereinheit zur Erhöhung der Elektrodenkraft als Doppel- oder Mehrfach-Kolbenanordnung ausgebildet ist, und/oder daß die Vorhubanordnung eine hydraulisch betätigte Vorhubkolben-Zylindereinheit aufweist, oder daß die Vorhubanordnung eine von einem Elektromotor beaufschlagbare, in Vorhubrichtung verlaufende Spindel und ein durch diese bewegtes, mit der Arbeitskolben-Zylindereinheit verbundenes Gewindeelement umfaßt.

7. Anlage nach einem der Ansprüche 1 bis 6,
**dadurch gekennzeichnet,**
**daß** die Arbeitskolben-Zylindereinheit (108) zwischen der Vorhubanordnung und der Schweißelektrode angeordnet ist, oder daß die Vorhubanordnung zwischen der Arbeitskolben-Zylindereinheit (108) und der Schweißelektrode angeordnet ist, und/oder daß die Elektrode von der Arbeitskolben-Zylindereinheit und die Gegenelektrode von der Vorhubanordnung beaufschlagt ist, und/oder daß die Kolbenstange (122', 134') wenigstens einer Kolben-Zylindereinheit (106, 108) in einem Wälz- oder Gleitlager geführt ist.

8. Verwendung einer Widerstandsschweißanlage nach einem der Ansprüche 1 bis 7 zum Widerstands-Punkt-, -Buckel- oder -Stumpfschweißen.

9. Verwendung einer Widerstandsschweißanlage nach einem der Ansprüche 1 bis 7 zum Buckelschweißen von Werkteilen aus Aluminium, Aluminium-Legierungen oder ähnlich formweichen Werkstoffen, wobei die bei der Stahlschweißung verwendeten, üblichen Buckelausführungen, vorzugsweise Rundbuckel in die Werkteile geprägt sind.

## Claims

1. A resistance welding plant which comprises a working piston in cylinder unit (108) for carrying out an electrode movement during the welding process and which is connected after a prestroke arrangement (106), by means of which the welding electrode can be led from a starting position removed from the workpiece into the position ready for use at the workpiece, **characterized in that** the prestroke arrangement (106) is disposed in a first housing (114a) and the working piston in cylinder unit (108) is disposed in a second housing (114b) separated from the first;
**in that** the ratio of the maximum possible stroke of the prestroke arrangement to the maximum possible stroke of the working piston in cylinder unit amounts to at least 5:1; and
**in that** the maximum possible stroke of the working piston in cylinder unit (108) corresponds to
- 1 to 40 times the follow-up movement path of the collapsing projections during projection welding, or
- 1 to 120 times the penetration path of the welding electrode into an originally hard workpiece, which becomes pasty during the welding process when spot welding, or
- 1 to 60 times the penetration path of the welding electrode into an originally soft workpiece which becomes pasty during the welding process when spot welding.

2. A plant in accordance with claim 1, **characterized in that** the maximum possible stroke of the working piston in cylinder unit (108) corresponds to 1 to 20 times, in particular 1 to 10 times, and preferably 1 to 5 times the follow-up movement path, of collapsing projections during projection welding; or **in that** the maximum possible stroke of the working piston in cylinder unit (108) corresponds to 1 to 60 times, in particular to 1 to 30 times, and preferably to 1 to 20 times the penetration path of the welding electrode into an originally hard material, which becomes pasty during the welding process when spot welding; or **in that** the maximum possible stroke of the working piston in cylinder unit corresponds to 1 to 30 times, and in particular to 1 to 15 times, and preferably to 1 to 10 times the penetration path of the welding electrode into an originally soft material, which becomes pasty during the welding process when spot welding.

3. A plant in accordance with any one of claims 1 to 2, **characterized in that** the working piston in cylinder unit (108) is formed as a double acting cylinder; and/or **in that** the sealing of the piston of the working piston in cylinder unit relative to the two air volumes present at both sides (cylinder cover side and cylinder base side) and the sealing of the piston rod within the cylinder base is optionally realized by sliding seals or by membranes of rubber or similar materials.

4. A plant in accordance with any one of the claims 1 to 3, **characterized in that** the working piston in cylinder unit (108) is pneumatically loaded; and/or **in that** the welding electrode is loaded by spring force at least after termination of the resistance welding; and/or **in that** the working piston in cylinder unit (108) is energized with compressed air via at least one changeover valve (140); and/or
**in that** the prestroke arrangement (106), which is in particular formed as a prestroke piston/cylinder unit, is pneumatically loaded.

5. A plant in accordance with any one of the claims 1 to 4, **characterized in that** a fixed or adjustable abutment (124a, 124b) is provided at the prestroke arrangement (106) to restrict the prestroke movement; and/or **in that** a fine adjustment device (124) is provided at the prestroke arrangement for the fine adjustment of the spacing between the workpiece and the welding electrode advanced into the position ready for use, which in particular takes place independently of the position of the prestroke piston in the prestroke cylinder; and/or **in that** the fine adjustment device (124) has an adjustment spindle which is coupled to the prestroke arrangement and can be locked by a counter-nut, which is coupled to the working piston in cylinder unit (108) and made to move jointly with the latter.

6. A plant in accordance with any one of the claims 1 to 5, **characterized in that** at least one piston in cylinder unit is formed as a twin piston or multi-piston arrangement to increase the electrode force; and/or **in that** the prestroke arrangement has a hydraulically actuated prestroke piston in cylinder unit; and/or **in that** the prestroke arrangement includes a spindle which extends in the prestroke direction and which can be actuated by an electric motor and a threaded element, which is moved by the latter and connected to the working piston in cylinder unit.

7. A plant in accordance with any one of the claims 1 to 6, **characterized in that** the working piston in cylinder unit (108) is arranged between the prestroke arrangement and the welding electrode, and/or **in that** the prestroke arrangement is arranged between the working piston in cylinder unit (108) and the welding electrode and/or **in that** the electrode is actuated by the working piston in cylinder unit and the counter-electrode is actuated by the prestroke arrangement; and/or **in that** the piston rod (122', 134') of at least one piston in cylinder unit (106, 108) is guided in a rolling bearing or sliding bearing.

8. Use of a resistance welding plant in accordance with any one of the claims 1 to 7 for resistance spot welding, resistance projection welding or resistance butt welding.

9. Use of a resistance welding plant in accordance with any one of the claims 1 to 7 for the projection welding of workpieces of aluminum, aluminum alloys or similar workpieces of soft form, wherein the customary projection designs used in steel welding, preferably a round projection, are impressed into the workpieces.

## Revendications

1. Installation de soudage par résistance comportant une unité de travail à piston-et-cylindre (108) pour exécuter un mouvement d'électrode pendant le processus de soudage, qui est montée derrière un dispositif d'approche (106) au moyen duquel l'électrode de soudage peut être amenée sur la pièce à oeuvrer depuis une position initiale éloignée de la pièce à oeuvrer jusque dans une position d'attente,
**caractérisée en ce que** :
le dispositif d'approche (10) est logé dans un premier boîtier (114a) et l'unité de travail à piston-et-cylindre (108) est logée dans un deuxième boîtier (114b) séparé du premier,
**en ce que** le rapport entre la course maximum possible du dispositif d'approche et la course maximum possible de l'unité de travail à piston-et-cylindre est d'au moins 5:1, et
**en ce que** la course maximum possible de l'unité de travail à piston-et-cylindre (108) correspond :
- à 1 à 40 fois la course de rattrapage de bossages en effondrement au cours de soudage par bossages, ou
- à 1 à 120 fois la course de pénétration de l'électrode de soudage dans une matière initialement dure et devenant pâteuse pendant le processus de soudage lors du soudage par points, ou
- à 1 à 60 fois la course de pénétration de l'électrode de soudage dans une matière initialement tendre et devenant pâteuse pendant le processus de soudage lors du soudage par points.

2. Installation selon la revendication 1, **caractérisée en ce que**
**en ce que** la course maximum possible de l'unité de travail à piston-et-cylindre (108) correspond à 1 à 20 fois, en particulier 1 à 10 fois, et de préférence 1 à 5 fois la course de rattrapage de bossages en effondrement lors cours de soudage par bossages, ou **en ce que** la course maximum de l'unité de travail à piston-et-cylindre (108) correspond à 1 à 60 fois, en particulier 1 à 30 fois, et de préférence 1 à 20 fois la course de pénétration de l'électrode de soudage dans une matière initialement dure et devenant pâteuse pendant le processus de soudage lors soudage par points, et **en ce que** la course maximum possible de l'unité de travail à piston-et-cylindre (108) correspond à 1 à 30 fois, en particulier 1 à 15 fois, et de préférence 1 à 10 fois la course pénétration de l'électrode de soudage dans une matière initialement tendre et devenant pâteuse pendant le processus de soudage lors du soudage par points.

3. Installation selon l'une ou l'autre des revendications 1 et 2, **caractérisée en ce que** l'unité de travail à piston-et-cylindre (108) est réalisée sous forme de cylindre à double effet, et/ou **en ce que** l'étanchéité du piston de l'unité de travail à piston-et-cylindre vis-à-vis des volumes d'air appliqués des deux côtés (côté du couvercle de cylindre et côté du fond de cylindre) et l'étanchéité de la tige de piston à l'intérieur du fond de cylindre est réalisée au choix par des joints coulissants ou par des membranes en caoutchouc ou en matériaux similaires.

4. Installation selon l'une des revendications 1 à 3, **caractérisée en ce que** l'unité de travail à piston-et-cylindre (108) est alimentée pneumatiquement, et/ou **en ce que** l'électrode de soudage est sollicitée par la force d'un ressort au moins après avoir achevé le soudage par résistance, et/ou **en ce que** l'unité de travail à piston-et-cylindre (108) est alimentée en air comprimé via au moins une soupape d'inversion (140), et/ou **en ce que** le dispositif d'approche (106) réalisé en particulier sous forme d'unité d'approche à piston-et-cylindre est alimenté pneumatiquement.

5. Installation selon l'une des revendications 1 à 4, **caractérisée en ce qu'**il est prévu sur le dispositif d'approche (106) une butée fixe ou réglable (124a, 124b) pour limiter le mouvement d'approche, et/ou **en ce qu'**il est prévu sur le dispositif d'approche un dispositif de réglage fin (124) pour le réglage fin s'effectuant en particulier indépendamment de la position du piston d'approche dans le cylindre d'approche, de la distance entre la pièce à oeuvrer et l'électrode de soudage déplacée dans la position d'attente, et/ou **en ce que** le dispositif de réglage fin (124) présente une broche de réglage avec blocage par contre-écrou, accouplée au dispositif d'approche, laquelle est accouplée à l'unité de travail à piston-et-cylindre (108) et est réalisée mobile conjointement à celle-ci.

6. Installation selon l'une des revendications 1 à 5, **caractérisée en ce qu'**au moins une unité de travail à piston-et-cylindre est réalisée sous forme d'agencement à double piston ou à pistons multiples pour augmenter la force de l'électrode, et/ou **en ce que** le dispositif d'approche est une unité d'approche à piston-et-cylindre à actionnement hydraulique ou **en ce que** le dispositif d'approche est une broche s'étendant en direction d'approche et entraînée par un moteur électrique et comprend un élément à pas de vis mû par ladite broche et relié à l'unité de travail à piston-et-cylindre.

7. Installation selon l'une des revendications 1 à 6, **caractérisée en ce que** l'unité de travail à piston-et-cylindre (108) est agencée entre le dispositif d'approche et l'électrode de soudage, ou **en ce que** le dispositif d'approche est agencé entre l'unité de travail à piston-et-cylindre (108) et l'électrode de soudage, et/ou **en ce que** l'électrode est sollicitée par l'unité de travail à piston-et-cylindre et la contre-électrode est sollicitée par le dispositif d'approche, et/ou **en ce que** la tige de piston (122', 134') d'au moins une unité à piston-et-cylindre (106, 108) est guidée dans un palier à roulement ou dans un palier à glissement.

8. Utilisation d'une installation à soudage par résistance selon l'une des revendications 1 à 7, pour effectuer des soudages par résistance par points, par bossages ou en bout-à-bout.

9. Utilisation d'une installation à soudage par résistance selon l'une des revendications 1 à 7, pour effectuer des soudages par bossages de pièces en aluminium, en alliages d'aluminium ou en matériaux similaires tendres au formage, les types de bossages généralement utilisés pour le soudage de l'acier, de préférence les bossages circulaires, étant estampés dans les pièces.
